# EUROPEAN PATENT APPLICATION

(11) **EP 2 429 212 A1**
(43) Date of publication of application: **14.03.2012**
(21) Application number: 11180544.6
(22) Date of filing: 08.09.2011
(51) Int. Cl.: H04N 21/434, H04N 21/438

(54) **System and method for tuning digital television channels**

(30) Priority: 13.09.2010 IT RM20100157 U
(71) Applicant: Interattiva Media S.r.l., 00197 Roma (RM) (IT)
(72) Inventor: Sbressa, Ilaria, 09122 Cagliari CA (IT)
(74) Representative: Pizzoli, Antonio

(57) **Abstract**

System for tuning digital television channels, which comprises a digital tuner (TM) suitable for demodulating an electromagnetic signal (EMS) for extracting from a transport stream (TS) an audio/video sub-stream (AVS) and a data sub-stream (DS), and comprises a processing module (PM) suitable for processing the data sub-stream (DS), which processing module (PM) retrieves from the data sub-stream (DS) information concerning logic localization indicators (PID) of television channels contained in the transport stream (TS) and creates a video image (VI) which contains a list of the television channels corresponding to said logic localization indicators (PID).

The present invention also relates to a method which can be carried out by means of said system.

## Description

The present invention relates to a system for tuning digital television channels, and in particular a system which works and performs its functions in the scope of the terrestrial television platform based on the international DVB-T standard. The present invention also relates to a method which can be carried out by means of said system.

The system according to the present invention is devoted to the final user of the terrestrial digital TV, namely the televiewer. It represents an innovative evolution of the classic remote control as it is known today, thereby forming its "virtual" extension. It is therefore not a product which replaces the classic remote control but it forms a functional integration thereof.

It is therefore an object of the present invention to provide a system free from the disadvantages of the known TV remote controls. Said object is achieved with a system and a method, whose main features are disclosed in claims 1 and 4, while other features are disclosed in the remaining claims.

The present system is activated by pressing a specific button of the classic remote control. Owing to this operation the TV screen will show a "virtual remote control" represented by a graphic image containing, inside a box, all the icons of the channels belonging to the editorial offer of the broadcaster tuned by the user. The user can then choose the channel to be selected by simply browsing, with the "arrow" keys of the classic remote control, the graphical icons shown on the "virtual remote control" on the video. Once the choice is made, the user can reach the selected channel by simply pressing the "ok" button on the classic remote control and the television will automatically and immediately tune said channel through the action of the system. It is important to remark that such a method allows the choice and selection of a channel, among the ones of the broadcaster offer, without knowing the LCN (Logical Channel Number) number of the same channel. This, given the large amount of channels available in the terrestrial digital offer, becomes an element of value of the system disclosed in the present application.

Under the profile of the technological architecture supporting the system according to the invention, it should be noted that its functionalities are based on the integrated cooperation (so as disclosed in detail later on) of different functional components of the DVB-T standard terrestrial television platform, with particular reference to the components of the broadcast system of the broadcaster, which "inject" into the DVB-T electromagnetic signal the information concerning the lists of the available channels, and to the components of the user's reception system where a specific processing of the DVB-T signal allows the development and the supply of the above mentioned functionalities.

### Benefits for the final user

Through the employment of the system according to the invention the user can significantly improve his fruition experience of the terrestrial digital TV in the operations of search, choice and selection of the channels he wants to watch. As a matter of fact, it is known that, differently from the old analog television, in the terrestrial digital television there is no shared rule for ordering the available channels, which, on the other hand, are in a much higher number. This causes, in fact, to a dispersion of the channels offered by a specific broadcaster on LCN (Logical Channel Number) numbers which are also very far from each other, thus making sometimes very complicated the operation of searching and selecting the preferred channels for the televiewer.

Thus, through the system according to the invention, the televiewer can choose and select his preferred channels without knowing the official LCN numeration of those channels, but simply in a graphical manner directly on the screen of his television.

A further benefit, even if it has a lower impact with respect to the above mentioned primary one, comes from the important information enriching concerning the scheduling of the various channels present in the system, which are made available on the TV of the final user with a simple pressure of a button.

### Benefits for the broadcaster

Though it is a product devoted to the final user, the system according to the invention is a formidable instrument of loyalty marketing which can be exploited by the broadcasters having an editorial offer divided into several distinct channels. As a matter of fact, when a user tunes any channel among those of the bouquet of such a broadcaster (it is hereby reminded that already today the two main Italian broadcasters have by far overcome a tenth of channels in their bouquets) and activates the system, the graphic item appearing on the screen of his TV will show all and only the icons of the channels belonging to the editorial offer of such a broadcaster. This becomes a strong stimulus for the user to stay within the scope of such a offer, where the browsing among the channels is simple and intuitive thanks to the system. This actually exerts a strong action of the televiewer's retention within the broadcaster offer with evident marketing advantages for the latter.

The system represents then a product for the terrestrial digital television platform which brings advantages both to the final user and to the broadcaster.

The system is characterized, under the profile of the innovation, by the following main reasons:
a. possibility of accessing to the channels of the transmitted bouquet without remembering the LCN (Logical Channel Number) position. Today, on the Italian terrestrial digital platform, there is no other way for tuning a channel apart from knowing its LCN number. As a matter of fact, the data sub-stream processing module (the working of which has been disclosed in the section "data sub-stream processing logic") allows the user to access to the channel of the bouquet by simply selecting with the "arrow" keys of the remote control the icon corresponding to the selected channel and by confirming the selection by pressing the OK button. The handling logic of the above mentioned module thus attends to tuning the desired channel, thereby sparing the user the need of remembering the LCN number of the same channel;
b. possibility of operating in the DVB-T environment, which is an open standard of the terrestrial digital television, which does not need a specific decoder as it occurs instead in the satellite ambit. In order to ensure this very important feature of the system, namely the working with any decoder/television compatible with the DVB-T/MHP standard, the above mentioned data sub-stream processing module, which is known to work inside the decoder, has been studied and implemented so as to operate in full conformity with the cited standards;
c. possibility of carrying out an important retention action of the user inside the bouquet representing the editorial offer of the broadcaster. For a given broadcaster the system presents only the channels concerning its editorial offer and makes it much less likely that the user moves to the offer of another broadcaster since it is a very handy way of browsing and selecting these channels; as a matter of fact the system uses the PID (Program IDentifier) indicators for the logic localization of the television channels provided by the broadcaster (see section "technical disclosure of the system", point b), which are used by the data sub-stream processing module for displaying on video the graphical interface for selecting the bouquet channels;
d. possibility of ordering the bouquet channels according to criteria different from the numerical one, for example according to thematic criteria; by using the PID indicators for the logic localization of the television channels provided by the broadcaster (see section "technical disclosure of the system", point b) the data sub-stream processing module can perform a channel ordering according to the criteria defined by the broadcaster, allowing thus the user to easily display the list of thematic channels of his interest (e.g. news, documentaries, children, etc.)

Further advantages and features of the system and the method according to the present invention will become clear to those skilled in the art from the following detailed and non-limiting description of an embodiment thereof with reference to the attached drawings, wherein:
- figure 1 shows a general scheme of the system;
- figure 2 shows a detailed scheme of the system of figure 1; and
- figure 3 shows a scheme of the decoder of the system of figure 2.

### FUNCTIONAL DISCLOSURE OF THE SYSTEM

The present section will provide a brief high-level functional disclosure of the system and the method, in order to clarify the technological and architectural context in which the invention develops. The subsequent section will provide the detailed technical disclosure.

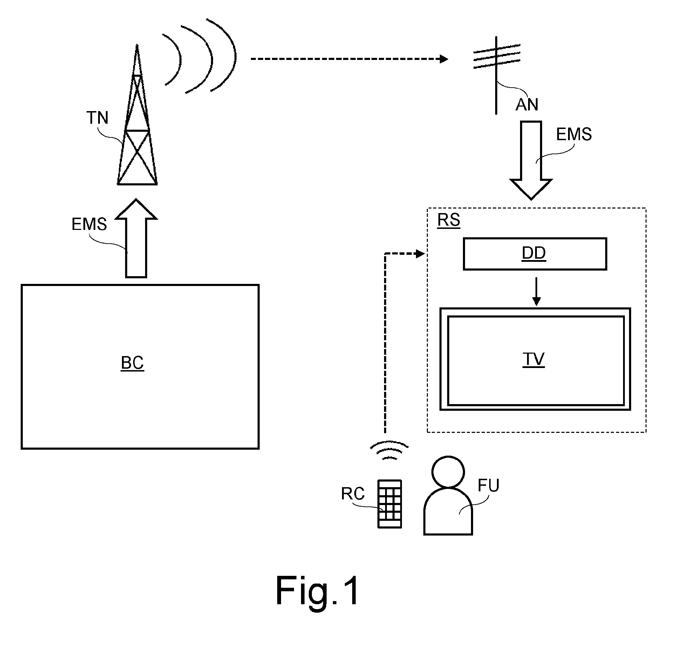

The system according to the invention works and performs its functions within the scope of the terrestrial digital television platform. At a general architectural level, the macro-components, briefly shown in Fig. 1, coming into play are the following:
a. broadcasting systems of broadcaster BC which make up a DVB-T standard electromagnetic signal EMS containing audio-video streams and a data stream;
b. transmission and distribution systems TN of the electromagnetic signal EMS according to the previous point which ensure that the DVB-T signal is broadcasted in the geographic areas under the competence of broadcaster BC;
c. an antenna system AN of a final user FU which carries the electromagnetic signal EMS picked up by antenna AN to a receiving system RS of the final user FU;
d. a receiving system RS of the final user FU made up of a DVB-T/MHP standard decoder DD and of a TV receiver;
e. the final user FU, televiewer, with a remote control RC for controlling the tuning of the TV receiver.

### TECHNICAL DISCLOSURE OF THE SYSTEM

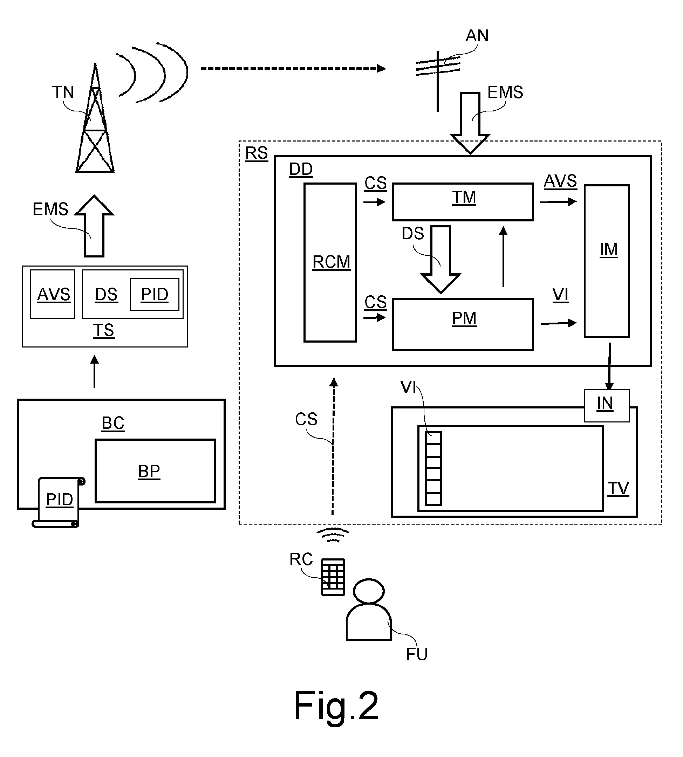

The present section will disclose the logic through which the components identified in Fig. 1 interoperate in order to perform the functions of the system. The following technical disclosure refers to Fig. 2. The method carried out by the system comprises the following operating steps:
a. a broadcaster BC through its broadcast platform BP formed by DVB-T standard data-carousel and mux components, makes up a television stream in the TS (Transport Stream) format containing an audio/video sub-stream AVS and a data sub-stream DS;
b. when making up the transport stream TS, broadcaster BC inserts into the data sub-stream DS, according to the DVB-T standard structure of the transport stream TS, the PID indicators of the logical localization of the television channels under the competence of broadcaster BC;
c. the transport stream TS which has been made up as above is modulated on an electromagnetic signal EMS with a suitable frequency assigned to broadcaster BC by the competent authorities;
d. the electromagnetic signal EMS is then delivered to the transmission and distribution network TN of broadcaster BC which ensures its transparent and synchronous transport and the distribution in the areas covered by broadcaster BC;
e. the electromagnetic signal EMS is received by the antenna system AN of the final user FU and brought by it up to the receiving system RS of the final user FU;
f. the processing of the electromagnetic signal EMS in the DVB-T/MHP standard decoder DD of the receiving system RS occurs in the following way:
   I. the electromagnetic signal EMS is input to a DVB-T tuner component TM and is processed by the latter with a standard demodulation process for extracting the audio/video sub-stream AVS from the transport stream TS;
   II. such an audio/video sub-stream AVS is sent to an interface module IM which performs the task of adapting said content for the input interface IN (SCART, HDMI, etc.) of a TV terminal;
   III. in the meanwhile a portion of the transport stream TS is sent to a processing module PM of the data sub-stream DS;
   IV. the processing module PM contains a processing logic of the data sub-stream DS, disclosed in detail in the subsequent section, through which the information concerning the PID logic localization indicators of the television channels inserted into the transport stream TS by broadcaster BC (see point b of this section) is retrieved from the data sub-stream DS;
   V. once the information according to the previous step are determined, the logic implemented in the processing module PM creates in a Graphical User Interface mode a video image VI which is made up, apart from the specific graphical appearance, of a table containing the list of the TV channels belonging to the bouquet of broadcaster BC. Such a video image VI must be intended as a client window aiming at presenting to the final user FU a channel list through which the choice of a specific channel can be carried out;
   VI. the processing module PM then sends such an image VI to the interface module IM, which provides for mixing image VI with the images forming the program broadcasted on the TV, so that the client window VI appears in an "overlay" mode on the underlying audio/video content AVS;
g. owing to the processing operations of the signal of the transport stream TS carried out by the processing module PM, the final user FU will see on the screen of his TV the audio/video program AVS currently broadcasted and the client window VI in an "overlay" mode;
h. by using the position arrows of the remote control RC of the DVB-T/MHP decoder DD, the user can browse the boxes of window VI in order to choose the desired channel;
i. once positioned on the selected channel, user FU can press the "ok" button of the remote control RC to obtain the immediate tuning of the TV receiver on the selected channel through the above operation on window VI. The operations for obtaining this result will be guided by the processing logic carried out by the processing module PM as it will be described in detail in the subsequent section;
j. the control of window VI disclosed in the two previous points (channel browsing through the "arrow" keys and selection through the "ok" button of the remote control RC) will occur through a communication signal CS between the remote control RC and decoder DD. Such a signal CS, where the system according to the invention is present, will be intercepted by a remote control interface module RCM of the decoder DD and directly sent to the processing module PM of the data sub-stream DS which will translate it into the actions required by user FU on window VI. It is important to remark that if the TV is tuned on a broadcaster BC which does not implement the system according to the invention, the remote control interface module RCM will forward the control signals CS of the remote control RC to the DVB-T tuner module TM.

### PROCESSING LOGIC OF THE DATA SUB-STREAM

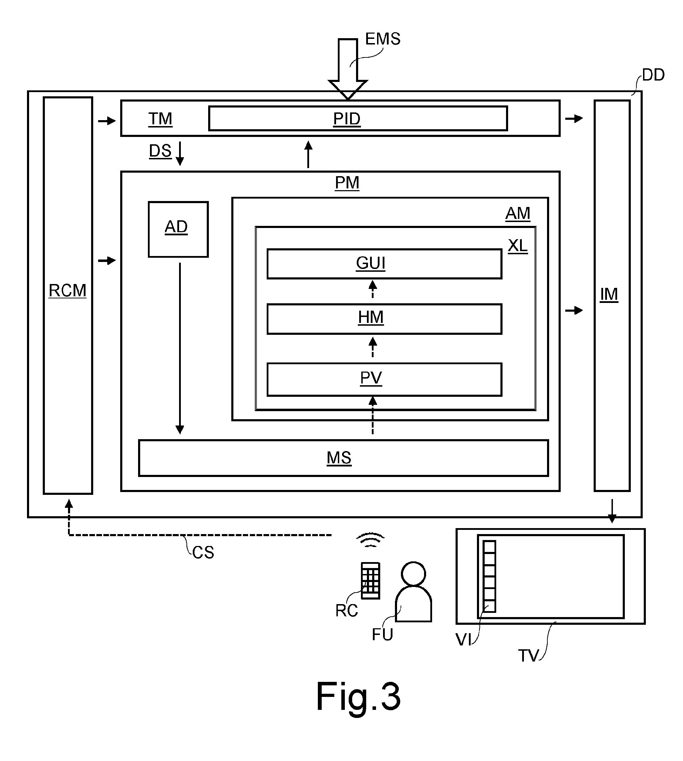

The present section will disclose the logic of the components attending to the processing of the data sub-stream DS. Such components represent the architectural and functional detail of the processing module PM of the data sub-stream DS shown in Fig. 2. The following technical disclosure refers to Fig. 3:
a. tuner TM of decoder DD receives the electromagnetic signal EMS, tunes the frequency and the television channel DVB-T and interprets the information contained in the transport stream TS for displaying the audio/video content AVS and handling the data part DS;
b. the data stream DS of the transport stream TS is sent to the processing module PM of the data sub-stream DS;
c. the data stream DS of the transport stream TS is processed by the processing module PM and sent to a MHP stack MS;
d. the MHP stack MS loads into a memory of decoder DD an application comprising data AD necessary for tuning the channels listed in the data stream DS of the transport stream TS;
e. an application manager AM starts the lifecycle of the application and of an Xlet XL;
f. Xlet XL creates a vector of pointers PV to the DVB-Locator feeds DF;
g. Xlet XL creates a module HM for handling the application logic;
h. Xlet XL builds a graphical user interface GUI and, through the audio/video/data interface module IM of decoder DD, sends such a GUI interface to television TV, which will show the client window VI for the channel selection;
i. the final user FU through his own remote control RC coupled with decoder DD selects a channel to be shown by using the direction keys of remote control RC and the OK button for confirming the selection;
j. when the OK button is pressed, the remote control RC sends a signal CS to the reception interface RCM of decoder DD, which interprets the action of user FU and sends it to the handling module HM of the application logic;
k. the handling module HM of the application logic obtains the references for the channel change and sends to tuner TM of decoder DD the channel change command and the PID indicator corresponding to the selected channel;
l. as a consequence, tuner TM tunes the selected channel;
m. the new signal is sent to the audio/video/data interface IM, which makes the new channel visible on the television TV.

The Xlet which carries out the above disclosed method can be implemented in a standard manner or at any rate within the scope of a person skilled in the art also by employing Xlet standard functions.

Possible modifications and/or additions may be made by those skilled in the art to the hereinabove disclosed and illustrated embodiment while remaining within the scope of the following claims.

This application claims the priority of the Italian utility model application RM2010U000157 filed on 13 September 2010, the entire contents of which are incorporated herein by reference.

## Claims

1. System for tuning digital television channels, which comprises a digital tuner (TM) suitable for demodulating an electromagnetic signal (EMS) for extracting from a transport stream (TS) an audio/video sub-stream (AVS) and a data sub-stream (DS), and comprises a processing module (PM) suitable for processing the data sub-stream (DS), **characterized in that** the processing module (PM) retrieves from the data sub-stream (DS) information concerning logic localization indicators (PID) of television channels contained in the transport stream (TS) and creates a video image (VI) which contains a list of the television channels corresponding to said logic localization indicators (PID).

2. System according to the previous claim, **characterized in that** it further comprises a remote control interface module (RCM) suitable for receiving communication signals (CS) from a remote control (RC) and for transmitting these signals (CS) to the processing module (PM) for selecting one of the television channels of the list of said video image (VI).

3. System according to one of the previous claims, **characterized in that** it further comprises an interface module (IM) suitable for adapting and transmitting said video image (VI) to a TV terminal.

4. Method for tuning digital television channels, **characterized in that** it comprises the following operating steps:
- a digital tuner (TM) of a receiving system (RS) demodulates an electromagnetic signal (EMS);
- the digital tuner (TM) extracts from a transport stream (TS) of said electromagnetic signal (EMS) an audio/video sub-stream (AVS) and a data sub-stream (DS);
- the digital tuner (TM) transmits the data sub-stream (DS) to a processing module (PM) of the receiving system (RS);
- the processing module (PM) retrieves from the data sub-stream (DS) information concerning logic localization indicators (PID) of television channels contained in the transport stream (TS);
- the processing module (PM) creates a video image (VI) which contains a list of the television channels corresponding to said logic localization indicators (PID).

5. Method according to the previous claim, **characterized in that** the processing module (PM) selects one of the television channels from the list of said video image (VI) according to communication signals (CS) transmitted by a remote control (RC) to a remote control interface module (RCM) of the receiving system (RS).

6. Method according to claim 4 or 5, **characterized in that** an interface module (IM) of the receiving system (RS) adapts and transmits said video image (VI) to a TV terminal.

7. Method according to one of claims 4 to 6, **characterized in that** said receiving system (RS) is a system according to one of claims 1 to 3.

8. System or method according to one of the previous claims, **characterized in that** said video image (VI) is mixed with the audio/video sub-stream (AVS).

9. System or method according to the previous claim, **characterized in that** said video image (VI) is mixed in an "overlay" mode with the audio/video sub-stream (AVS).

10. System or method according to one of the previous claims, **characterized in that** the processing logic of the data sub-stream (DS) is implemented by the processing module (PM) by means of an Xlet (XL) which creates a handling module (HM) which retrieves references of a television channel selected by a user (FU).

11. System or method according to the previous claim, **characterized in that** said handling module (HM) sends to the digital tuner (TM) a channel change command and the logic localization indicator (PID) of said selected television channel.

12. System or method according to claim 10 or 11, **characterized in that** said television channel is selected through said remote control interface module (RCM).

13. System or method according to one of the previous claims, **characterized in that** said digital tuner (TM) is included in a DVB-T/MHP decoder (DD).
